# EUROPÄISCHE PATENTANMELDUNG

(11) **EP 1 039 194 A1**
(43) Veröffentlichungstag der Anmeldung: **27.09.2000**
(21) Anmeldenummer: 99105875.1
(22) Anmeldetag: 23.03.1999
(51) Int. Cl.: F16L 3/00, F16L 3/14

(54) **Programmgesteuertes Verfahren zur Optimierung der Planung und Durchführung einer Montage von in Befestigungsorganen, insbesondere von in Rohrschellen gehaltenen Rohrsystemen**

(71) Anmelder: J. van Walraven Holding B.V., 3640 Mijdrecht (NL)
(72) Erfinder: van Walraven, J. Dhr., 3641 GP Mijdrecht (NL)
(74) Vertreter: Zech, Stefan Markus Dipl.-Phys.

(57) **Zusammenfassung**

Bei dieser Erfindung handelt es sich um ein programmgesteuertes Verfahren zur Optimierung der Planung und Durchführung einer Montage von in Befestigungsorganen, insbesondere von in Rohrschellen gehaltenen Rohrsystemen, gekennzeichnet durch folgende Schritte:
- Eingeben mindestens eines Feldes von Befestigungsparametern, welche die Befestigungsbedingungen des zu montierenden Rohrsystems für einen Befestigungspunkt an einer Wand, Decke oder an einer Befestigungsschiene spezifizieren,
- Ermittlung anhand der Befestigungsparameter des zuvor ausgewählten Befestigungsorgans und ggf. unter Berücksichtigung von Rohrparametern der für die konkreten Befestigungsbedingungen geeigneten Befestigungsmittel und
- Bereitstellen der aufgefundenen Befestigungsmittel auf einer Anzeigeeinrichtung, einer Ausgabeeinrichtung oder zum Zwecke einer weiteren Verarbeitung.

## Beschreibung

Die Erfindung betrifft ein Verfahren nach dem Oberbegriff des Patentanspruchs 1 zur Planung und Durchführung einer Montage von in Befestigungsorganen, insbesondere von in Rohrschellen gehaltenen Rohrsystemen. Die Planung und Durchführung der Montage von Rohrsystemen in einem Gebäude, beispielsweise von Belüftungsrohren, Heizungsrohren, Zuoder Abwasserrohren erfordert bislang fundierte Kenntnisse über die technischen Anforderungen an die zur Befestigung der Rohre notwendigen Einrichtungen. Je nach Anwendungsfall, Rohrmaterial, Rohrdurchmesser, der geplanten Montageart sowie des Montageortes ergeben sich eine Unzahl möglicher Kombinationsfälle, so daß der Installateur genauestens Bescheid wissen muß, inwieweit einzelne Befestigungseinrichtungen zueinander kompatibel sind und vor allem, ob sie der technischen Problemstellung gerecht werden. Oftmals werden, da verläßliche Abschätzungen bislang zu aufwendig sind, die Befestigungseinrichtungen daher überdimensioniert oder es werden Befestigungseinrichtungen gewählt, die für den konkreten Anwendungsfall nur schlecht geeignet sind.

Während im ersten Fall die Anschaffungskosten unnötig erhöht werden, können sich im letztgenannten Fall unüberschaubare Risiken und Folgekosten ergeben.

Die Aufgabe der vorliegenden Erfindung besteht darin, ein Verfahren anzugeben, mit Hilfe dessen die Planung und Durchführung einer Montage von Rohrsystemen wesentlich verbessert und erleichtert wird.

Diese Aufgabe wird mit einem Verfahren nach den Merkmalen der Ansprüche 1, 5 oder 8 gelöst. Vorteilhafte Weiterbildungen sind in den Unteransprüchen angegeben.

Gemäß einer Kernidee der vorliegenden Erfindung umfaßt das programmgesteuerte Verfahren zur Optimierung der Planung und Durchführung einer Montage von Rohrsystemen die folgenden Schritte:
Eingeben mindestens eines Feldes von Befestigungsparametern, welche die Befestigungsbedingungen des zu montierenden Rohrsystems für einen Befestigungspunkt an einer Wand, Decke oder einer Befestigungsschiene spezifizieren,
Ermittlung anhand der Befestigungsparameter, des zuvor ausgewählten Befestigungsorgans und ggf. unter Berücksichtigung von Rohrparametern eines für die konkreten Befestigungsbedingungen geeigneten Satzes von Befestigungsmitteln und
Bereitstellen des aufgefundenen Satzes von Befestigungsmitteln auf einer Anzeigeeinrichtung, einer Ausgabeeinrichtung oder zum Zwecke einer weiteren Verarbeitung.

Mit einem Verfahren nach der vorliegenden Erfindung lassen sich aus einer Vielzahl von für den jeweiligen Befestigungsfall nicht immer geeigneten Befestigungsmitteln die konkret geeigneten anhand vorgegebener Kriterien herausfiltern. Sollten sich mehrere Alternativen bei den Befestigungsmitteln als gleich geeignet erweisen, so werden diese Alternativen als gleich geeignet angezeigt.

Ein weiterer wichtiger Aspekt der vorliegenden Erfindung ist darin zu sehen, daß die als geeignet erscheinenden Befestigungsmittel als kompletter Satz ermittelt und ausgegeben werden. Der Satz von Befestigungsmitteln besteht im Sonderfall aus einem, im Regelfall hingegen jedoch aus zwei bis sechs oder mehr Befestigungsmitteln. Ein solcher Satz von Befestigungsmitteln kann beispielsweise folgende Einzelkomponenten umfassen, Hammerkopfschraube, Mutter, Gewindestift, Kugelgelenk und Gewindemuffe. Weitere Befestigungsmittel können Komponenten wie Schiebemuttern, Unterlegscheiben, Stockschrauben umfassen. Mit dem erfindungsgemäßen Verfahren wird nicht nur das an sich geeignete Befestigungsmittel ausgegeben, sondern es wird der komplette Satz von Befestigungsmitteln komplettiert und aufeinander abgestimmt. Beispielsweise wird die Länge der Gewindestange wie hier für den konkreten Einsatzfall unter Berücksichtigung der weiteren Befestigungsmittel wie Kugelgelenk etc. notwendig ist, errechnet. Das auf diese Weise komplettierte Feld von Befestigungsmitteln kann insbesondere als Stückliste oder graphisch ausgegeben werden. In der graphischen Ausgabe kann der Satz von Befestigungsmitteln ausgedruckt oder als Datenfeld weiteren graphischen Planungsarbeiten zugrundegelegt werden. Der ermittelte Satz von Befestigungsmitteln kann ganz generell als Datenfeld zum Zwecke einer weiteren Verarbeitung bereitgestellt werden.

Die unterschiedlichen Ssätze von Befestigungsmitteln sind aus Kombinationen zueinander kompatibler Befestigungsmittel gebildet. Viele der einzelnen Befestigungsmittel sind jedoch Bestandteil mehrerer Sätze von Befestigungsmitteln.

Die Zuordnung und Auswahl der geeigneten Befestigungsmittel hängt neben dem verwendeten Befestigungsorgan und des gewünschten Abstandes vom Montagegrund zusätzlich von folgenden Parametern ab: Montageort, Montageart und Auslegung der Befestigung. Je nach Kombination der Parameter Montageort, Montageart und Auslegung der Befestigung werden nach dem erfindungsgemäßen Verfahren aus der Vielzahl unterschiedlicher Befestigungsmittel die jeweils geeigneten Befestigungsmittel vorgeschlagen. Der Parameter Montageort kann beispielsweise die folgenden Alternativen berücksichtigen: Deckenmontage, Wandmontage. Der Parameter Montageart kann folgende Alternativen berücksichtigen: Montage an einer Befestigungsschiene, hängend oder stehend, Montage über ein Holzgewinde im Montagegrund, metrisches Gewinde im Montagegrund und metrisches Gewinde auf dem Montagegrund. Die Alternativen ,,hängend - stehend" sind so zu verstehen, daß eine ,,hängende Befestigung", eine Befestigung des Rohrsystems unterhalb der Befestigungsschiene und ,,stehend" eine Befestigung des Rohrsystems oberhalb der Befestigungsschiene meint. Dabei kann insbesondere in der Alternative ,,stehend" das Rohrsystem direkt an der Befestigungsschiene anliegen oder mit einer vorbestimmten Bcabstandung daran befestigt sein. Schließlich kann der Parameter Auslegung der Befestigung die folgenden Alternativen umfassen: Starre Befestigung, starre Befestigung des Rohrs mit definiertem Gefälle und flexible Befestigung des Rohrs.

Weiterhin muß für den Fall, daß der Parameter Montageart auf "Schienenbefestigung" gesetzt ist, auch der zuvor angegebene Abstand zum Montagegrund beachtet werden. Ist dieser zu groß, scheiden bereits eine Reihe von Befestigungsmitteln aus. Um hier jedoch größere Wahlmöglichkeiten bieten zu können, kann in einem weiteren Verfahrensschritt erneut die Bestätigung des vergleichsweise langen Abstandes zum Montagegrund gefordert werden. Erfolgt die Bestätigung, so wird eine Einschränkung auf solche Befestigungsmittel vorgenommen, die für diesen Abstand geeignet sind. Wird die Bestätigung verneint, wird eine Neudefinition des Abstandes vom Montagegrund angefordert.

Das erfindungsgemäße Verfahren kann durchgeführt werden, um einen oder mehrere Sätze geeigneter Befestigungsmittel zu erhalten. Das Verfahren kann aber auch als Kontrollverfahren eingesetzt werden. In diesem Fall ist zuvor ein ,,gewünschter" Feld von Befestigungsmitteln ausgewählt. Anhand des beschriebenen Verfahrens wird überprüft, ob die ,,gewünschten" Befestigungsmittel für den konkreten Anwendungsfall geeignet sind.

In einem alternativen oder ergänzenden Verfahren werden nicht nur die Befestigungsmittel, sondern die auch das Rohr unmittelbar tragenden Befestigungsorgane für den konkreten Anwendungsfall ermittelt. Das Verfahren umfaßt die folgenden Schritte:
Eingeben mindestens eines Feldes von Rohrparametern, welche die Art und ggf. die Funktionsweise des vorgesehenen Rohrsystems spezifizieren,
Ermittlung mindestens eines geeigneten Befestigungsorgans aus einer Vielzahl von unterschiedlichen Befestigungsorganen als ,,ausgewähltes" Befestigungsorgan und
Bereitstellen des ausgewählten Befestigungsorgans auf einer Anzeigeeinrichtung, einer Ausgabeeinrichtung oder zum Zwecke einer weiteren Verarbeitung.

In einer bevorzugten Ausgestaltung vollzieht sich Suche und Auswahl der geeigneten Befestigungsorgane, insbesondere der geeigneten Rohrschellen mindestens anhand der folgenden Parameter:

Einen Parameter für den Leitungstyp bzw. die Anwendung und
vorzugsweise weiterhin einen Parameter für den Rohrtyp
und vorzugsweise einem Parameter für den Durchmesser des Rohres.
Die Parameter Leitungstyp/Anwendung und Durchmesser des Rohres stellen dabei jeweils Muß-Felder dar, d.h. hier muß eine Auswahl durch den Anwender getroffen werden. Bei dem Parameter Leitungstyp/Anwendung können insbesondere die Alternativen Abwasserleitung, Trinkwasserleitung, Heizungsrohr, Lüftungsrohr Berücksichtigung finden. Für den Parameter Durchmesser des Rohrs muß der Anwender zunächst die Maßeinheit (Zoll, DN, mm) festlegen. In Abhängigkeit der getroffenen Auswahl erscheint in der Auswahlliste die Abmessung in der betreffenden Einheit. Wird ,,DN" ausgewählt, könnten beispielsweise folgende Maße angeboten werden: DN 50, 65, 70, 80, 100, 125, 150, 200, 250.

Schließlich kann als weiterer Parameter noch der Rohrtyp ausgewählt werden, wobei hier mindestens die folgenden Alternativen Berücksichtigung finden können: Gußrohr, SML-Rohr, PVC-Rohr, Wickelfalzrohr, Kupferrohr, Metallrohr.

In einer bevorzugten Ausgestaltung ist die Möglichkeit vorgesehen, weitere Parameter einzugeben, nämlich mindestens einen der folgenden Parameter:
Einen Parameter für die Schallschutzanforderung,
einen Parameter für die Korrosionsschutzanforderung, wobei mindestens die folgenden Alternativen Berücksichtigung finden können: verzinkt, grob, Edelstahl A", Edelstahl A4, Kuper, Aluminium
und einen Parameter für die Anwendungsumgebung, wobei hier mindestens zwischen Innenbereich-trocken, Innenbereich-feucht und Außenbereich unterschieden werden könnte.

Die Angabe dieser letztgenannten Parameter ist jedoch freigestellt. Sollte aufgrund der Kombination der eingegebenen Parameter die Suche nach einem geeigneten Befestigungsorgan erfolglos verlaufen, wird eine Meldung ,,kein passendes Befestigungsorgan gefunden - überprüfen Sie Ihre Auswahlkriterien" ausgegeben.

Als weiterer Parameter könnte auch noch das im Betrieb zu erwartende Gewicht des Rohrsystems eingegeben oder vorab ermittelt werden.

Das Verfahren zur Ermittlung des geeigneten Befestigungsorgans kann mit dem Verfahren zur Ermittlung der geeigneten Befestigungsmittel kombiniert werden, wobei das ,,geeignete Befestigungsorgan" anhand des vorbeschriebenen Verfahrens ermittelt wird.

Schließlich wird noch ergänzend oder alternativ ein Verfahren zur Ermittlung einer oder mehrerer geeigneter Befestigungsschienen vorgeschlagen. Das Verfahren umfaßt die folgenden Schritte:
Eingeben mindestens eines Feldes von Schienenparametern, welche die Befestigungsbedingungen und weitere Rohrparameter berücksichtigen,
Ermittlung mindestens einer geeigneten Befestigungsschiene aus einer Vielzahl von Befestigungsschienen unter Berücksichtigung einer oder mehrerer erfolgenden Kriterien: Der maximalen zulässigen Spannung in der Schiene, dem maximal zulässigen Moment sowie der maximal zulässigen Durchbiegung und
Bereitstellen der aufgefundenen Befestigungsschiene auf einer Anzeigeeinrichtung, einer Ausgabeeinrichtung oder zum Zwecke einer weiteren Verarbeitung.

In einer zweckmäßigen Ausgestaltung wird zunächst eine gewünschte Befestigungsschiene vorausgewählt und anhand des vorstehend beschriebenen Verfahrens die Eignung der Befestigungsschiene überprüft. In einer weiter vorteilhaften Ausgestaltung wird die Befestigungsschiene im Verfahren ggf. angepaßt und somit die gewünschte Befestigungsschiene durch eine geeignete Befestigungsschiene ersetzt. Beispielsweise kann sich bei der Durchführung der Planung ergeben, daß Länge oder Stärke der ehemals gewünschten Befestigungsschiene nicht mehr ausreicht. Die Befestigungsschiene wird dann automatisch verlängert bzw. es wird zur nächst stärkeren gegriffen. Insbesondere kann bei Verlängerung die Biegelinie zu groß werden, so daß auch hier auf die nächst stärkere Befestigungsschiene zugegriffen wird.

In einer vorteilhaften Ausgestaltung des Verfahrens umfaßt der Feld von Schienenparametern einen Parameter für die Konstruktionsart der Schienenbefestigung, wobei insbesondere die Alternativen Wandkonsole oder Schienenkonstruktion ohne Stützbalken, Wandkonsole oder Schienenkonstruktion mit Stützbalken (45°), Schienenkonstruktionen mit Aufhängung bzw. Auflage an den Schienenenden oder Schienenkonstruktion mit Aufhängung bzw. Auflage nach innen versetzt Berücksichtigung finden können.

Darüber hinaus kann der Feld von Schienenparametern einen weiteren Parameter für die Belastungsart der Schiene umfassen, wobei insbesondere die Alternativen Punktbelastung, Flächenbelastung sowie Kombination aus Flächen- und Punktbelastung Berücksichtigung finden können.

Für jeden möglichen, sich aus einer beliebigen Kombination der Parameter ergebenden Belastungsfall muß eine Berechnung der in der Befestigungsschiene maximal auftretenden Spannung und des maximal auftretenden Moments erfolgen, wobei die jeweiligen Ergebnisse in einem Komparator mit festgelegten Grenzwerten verglichen werden:
Grenzwert der zulässigen Spannung: σ = 160 N: mm²
Grenzwert des maximal zulässigen Moments in (N:m) : m = 160 x W

Darüber hinaus ist es zweckmäßig für jeden sich aus der Kombination der Parameter ergebenden Belastungsfall ebenfalls die maximale Durchbiegung der Befestigungsschiene zu berechnen: Maximale Durchbiegung in mm: F = 1:150 x L

Werden die jeweiligen maximalen Werte überschritten, ist die überprüfte Befestigungsschiene für den konkreten Montagefall nicht geeignet. Bleiben alle berechneten Belastungen unterhalb der zulässigen Grenzwerte, so ist der jeweils kleinste Wert für die Auswahl der geeigneten Befestigungsschiene ausschlaggebend, wobei zwischen den einzelnen Belastungen eine gleiche oder eine vorbestimmte andere Gewichtung vorzunehmen ist.

Vorteilhafterweise wird in einer Ausgestaltung des Verfahrens die für die Montagepunkte der Befestigungsschiene auftretenden Reaktionskräfte angegeben, um dem Anwender eine Unterstützung bei der Auswahl eines geeigneten Dübels zur Befestigung der Schiene am Montagegrund zu geben.

Ferner kann als zusätzlicher Parameter bei allen angegebenen Verfahren auch das zu erwartende Gewicht des Rohrsystems im Betrieb mit Berücksichtigung finden. Zu diesem Zweck wird eine Berechnung durchgeführt, welche den zu erwartenden Befüllungsgrad des Rohrsystems berücksichtigt.

Die ermittelten Befestigungsorgane, Befestigungsmittel und/oder Befestigungsschienen können in Form einer Stückliste ausgegeben werden, die unmittelbar als Unterlage zur Komplettierung der benötigen Komponenten dient. Vorzugsweise sind für die Befestigungsorgane, Befestigungsmittel und Befestigungsschienen auch allgemeine technische Informationen sowie bevorzugtermaßen technische Zeichnungen abrufbar. Die technischen Zeichnungen können in graphische Verarbeitungsprogramme (CAD) überführt werden.

Mit Hilfe der vorgenannten Verfahren wird Planern und Installateuren ein Hilfsmittel an die Hand gegeben, das diesen die Planung und damit auch die Durchführung der Befestigung von Rohrsystemen erheblich erleichtert.

Die nachfolgende, einzige Zeichnung dient zur Erläuterung der Erfindung auch hinsichtlich weiterer Merkmale und Vorteile, wobei ein Ausführungsbeispiel eines an einer Befestigungsschiene montierten Rohrsystems schematisch dargestellt ist.

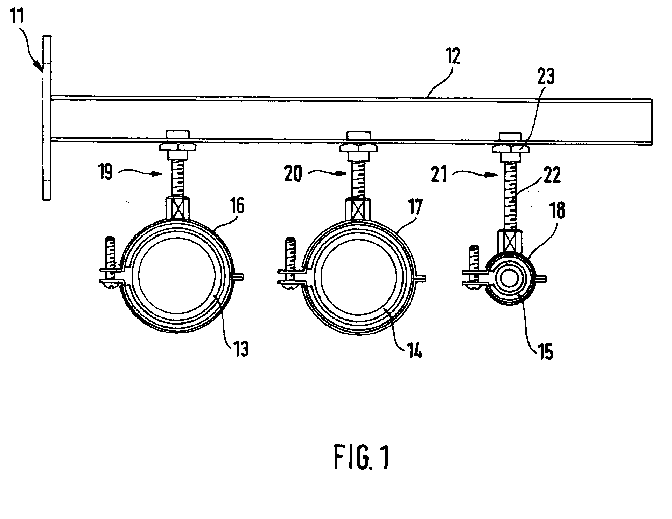

Die in Fig. 1 dargestellte Ausführungsform umfaßt zunächst eine an einer Wand 11 angebrachte Befestigungsschiene 12. Rohre 13, 14, 15 sind mittels Befestigungsorganen 16, 17, 18 über Befestigungsmittel 19, 10, 21 an der Befestigungsschiene 12 montiert. Die Befestigungsorgane 16, 17, 18 sind hier als öffenbare Rohrschellen ausgebildet. Die Befestigungsmittel 19, 20, 21 umfassen bei der dargestellten Ausführungsform einen Gewindestift 22 und eine Mutter 23

## Patentansprüche

1. Programmgesteuertes Verfahren zur Optimierung der Planung und Durchführung einer Montage von in Befestigungsorganen, insbesondere von in Rohrschellen gehaltenen Rohrsystemen, gekennzeichnet durch folgende Schritte:
- Eingehen mindestens eines Feldes von Befestigungsparametern, welche die Befestigungsbedingungen des zu montierenden Rohrsystems für einen Befestigungspunkt an einer Wand, Decke oder an einer Befestigungsschiene spezifizieren,
- Ermittlung anhand der Befestigungsparameter, des zuvor ausgewählten Befestigungsorgans und ggf. unter Berücksichtigung von Rohrparametern eines für die konkreten Befestigungsbedingungen geeigneten Satzes von Befestigungsmitteln und
- Bereitstellen des aufgefundenen Satzes von Befestigungsmitteln auf einer Anzeigeeinrichtung, einer Ausgabeeinrichtung oder zum Zwecke einer weiteren Verarbeitung.

2. Verfahren nach Anspruch 1,
**dadurch gekennzeichnet**,
daß das Feld von Befestigungsparametern einen Parameter für den gewählten Montageort umfaßt,
wobei insbesondere die Alternativen Decke- oder Wand-Montage Berücksichtigung finden können.

3. Verfahren nach Anspruch 1 oder 2,
**dadurch gekennzeichnet**,
daß das Feld von Befestigungsparametern einen Parameter für die gewählte Montageart umfaßt,
wobei insbesondere die Alternativen Schienenbefestigung hängend oder stehend, oder schienenlose Befestigung Berücksichtigung finden können.

4. Verfahren nach einem der Ansprüche 1 bis 3,
**dadurch gekennzeichnet,**
daß das Feld von Befestigungsparametern einen Parameter für die gewählte Auslegung der Befestigung umfaßt, wobei insbesondere die Alternativen starre Auslegung, starre Auslegung mit Höhenregelung, flexible Auslegung mit Höhenregelung Berücksichtigung finden können.

5. Verfahren nach dem Oberbegriff von Anspruch 1 oder einem der Ansprüche 1 bis 4,
**gekennzeichnet durch folgende Schritte:**
- Eingeben mindestens eines Feldes von Rohrparametern, welche die Art und ggf. die Funktionsweise des vorhergesehenen Rohrsystems spezifizieren,
- Ermittlung mindestens eines geeigneten Befestigungsorgans aus einer Vielzahl von unterschiedlichen Befestigungsorganen als ausgewähltes Befestigungsorgan und
- Bereitstellen des ausgewählten Befestigungsorgans auf einer Anzeigeeinrichtung, einer Ausgabeeinrichtung oder zum Zwecke einer weiteren Verarbeitung.

6. Verfahren nach Anspruch 5,
**dadurch gekennzeichnet,**
daß das Feld von Rohrparametern mindestens die folgenden Parameter
- einen Parameter für den Leitungstyp bzw. die Anwendung
- und vorzugsweise einen Parameter für den Rohrtyp
- und vorzugsweise einen Parameter für den Durchmesser des Rohres,
umfaßt.

7. Verfahren nach einem oder mehreren der vorhergehenden Ansprüche,
**dadurch gekennzeichnet**,
daß das Verfahren nach Anspruch 5 dem Verfahren nach Anspruch 1 vorgeschaltet ist.

8. Verfahren nach dem Oberbegriff von Anspruch 1 oder einem der Ansprüche 1 bis 7, wobei die Montage des im Befestigungsorgan gehaltenen Rohrsystems über am Befestigungsort angebrachten Befestigungsschienen erfolgt,
**gekennzeichnet durch folgende Schritte:**
- Eingeben mindestens eines Feldes von Schienenparametern, welche die Befestigungsbedingungen der zu montierenden Befestigungsschienen spezifiziert und ggf. weitere Rohrparameter umfaßt,
- Ermitlung mindestens einer geeigneten Befestigungsschiene aus einer Vielzahl von Befestigungsschienen unter Berücksichtigung einer oder mehrerer folgenden Kriterien:
- der maximal zulässigen Spannung in der Schiene,
- dem maximal zulässigen Moment,
- der maximal zulässigen Durchbiegung und
- Bereitstellen der aufgefundenen Befestigungsschienen auf einer Anzeigeeinrichtung, einer Ausgabeeinrichtung oder zum Zwecke einer weiteren Verarbeitung.

9. Verfahren nach Anspruch 8,
**dadurch gekennzeichnet,**
daß zunächst eine gewünschte Befestigungsschiene vorausgewählt wird und anhand des Verfahrens nach Anspruch 9 die Eignung der Befestigungsschiene überprüft wird.

10. Verfahren nach Aanspruch 9,
**dadurch gekennzeichnet,**
daß bei Nichteignung der gewünschten Befestigungsschiene diese durch eine geeignete Befestigungsschiene ersetzt wird und die geeignete Befestigungsschiene auf einer Anzeigeneinrichtung einer Ausgabeeinrichtung oder zum Zwecke einer weiteren Verarbeitung bereitgestellt wird.

11. Verfahren nach Anspruch 10,
**dadurch gekennzeichnet,**
daß das Feld von Schienenparametern einen Parameter für die Konstruktionsart der Schienenbefestigung umfaßt,
wobei insbesondere die Alternativen,
- Wandkonsole oder Schienenkonstruktion ohne Stützbalken,
- Wandkonsole oder Schienenkonstruktion mit Stützbalken,
- Schienenkonstruktion mit Aufhängung bzw. Auflage an den Schienenenden,
- Schienenkonstruktion mit Aufhängung bzw. Auflage nach innen versetzt
Berücksichtigung finden können.

12. Verfahren nach einem der vorhergehenden Ansprüche,
**dadurch gekennzeichnet,**
daß das Feld von Schienenparametern einen Parameter für die Belastungsart der Schiene umfaßt, wobei insbesondere die Alternativen
- Punktbelastungen,
- Flächenbelastungen,
- Kombination aus Flächen- und Punktbelastungen Berücksichtigung finden können.

13. Verfahren nach einem der Ansprüche 1 bis 12,
**dadurch gekennzeichnet,**
daß das im Betrieb zu erwartende Gewicht des Rohrsystems in einer den zu erwartenden Befühlungsgrad berücksichtigenden Berechnung oder Tabellenauswertung ermittelt wird.
